# EUROPÄISCHE PATENTSCHRIFT

(11) **EP 3 383 726 B1**
(45) Veröffentlichungstag und Bekanntmachung des Hinweises auf die Patenterteilung: **17.06.2020**
(21) Anmeldenummer: 16797950.9
(22) Anmeldetag: 18.11.2016
(51) Int. Cl.: B62D 5/04

(54) **AKTIVE ANTI-KLAPPERGERÄUSCH-REGELUNG**
ACTIVE ANTI-RATTLE NOISE CONTROL
RÉGLAGE ANTI-CLIQUETIS ACTIF

(30) Priorität: 02.12.2015 DE 102015015577
(43) Veröffentlichungstag der Anmeldung: 10.10.2018
(73) Patentinhaber: thyssenkrupp Presta AG, 9492 Eschen (LI); thyssenkrupp AG, 45143 Essen (DE)
(72) Erfinder: DR., MEYER, Martin, 9428 Walzenhausen (CH); DR., MÖLLER, Dirk, 9466 Sennwald (CH)
(74) Vertreter: thyssenkrupp Intellectual Property GmbH
(86) Internationale Anmeldenummer: PCT/EP2016/078188
(87) Internationale Veröffentlichungsnummer: WO 2017/093051

(56) Entgegenhaltungen:
- EP-A1- 3 072 784
- JP-A- 2014 227 115
- JP-A- 2015 178 286
- JP-A- 2016 068 676
- US-A1- 2004 245 041
- US-A1- 2009 000 857
- US-A1- 2012 185 132
- US-A1- 2013 124 048

## Beschreibung

Die vorliegende Erfindung betrifft eine Servolenkung mit den Merkmalen des Oberbegriffs des Anspruchs 1.

In elektromechanischen Servolenkungen wird über einen Elektromotor ein Drehmoment erzeugt, das auf ein Getriebe übertragen und dort dem vom Fahrer gestellten Lenkmoment überlagert wird. Im Getriebe arbeitet das Motormoment dabei immer mit der Last der Lenkvorgabe des Fahrers. Der ideale Rotorwinkel und das geforderte Motormoment werden dabei durch eine Vektorregelung berechnet, in Form von Phasenströmen in der Leistungsstufe an den Motor elektrisch übertragen und durch die resultierenden Magnetfelder physikalisch im Motor erzeugt. Die Regelung wird stellenweise schon heute für die Verbesserung bestimmter Geräuschphänomene wie dem Auftreten von Geräuschen bei Restwelligkeit (Ripple) verwendet.

Bei der Überfahrung von unebenen Straßen wirken starke dynamische Längskräfte und Querkräfte auf die Räder und somit auf die Spurstangen. Diese haben bei besonderen Straßenprofilen impulshaften Charakter. Längskräfte führen zu störenden Kräften in den Spurstangen, da der Raddrehpunkt nicht im Radmittelpunkt liegt. Die an der Zahnstange im Lenkgetriebe resultierenden Kräfte, die abhängig von den angeschlossenen Massen und Trägheiten sind, versetzen die restliche Lenkung bis hin zum Lenkrad in Bewegung. Die translatorische Bewegung der Zahnstange wird im Ritzel in eine rotatorische Bewegung und ein Drehmoment umgewandelt. Diese Bewegungen und Momente werden über eine Lenkzwischenwelle auf die Servoeinheit im Bereich der oberen Lenksäule übertragen.

Bei elektromechanischen Servolenkungen mit Lenkunterstützung an der Lenksäule und Schneckengetriebe wird das Drehmoment auf das Schneckenrad der Servoeinheit übertragen. Aufgrund des Eingriffswinkels in der Verzahnung wirken auf die Schnecke im Getriebe Kräfte, wodurch sie vertikal beschleunigt wird oder sich elastisch verformt und somit von der Verzahnung abhebt. Dieser Effekt ist umso stärker je größer die Gegenkraft an der Schnecke ist, z.B. aufgrund der Rotorträgheit oder einer falschen Regelung. Dies hat ein Flankenspiel zur Folge. Der Drehmomentstoß wird weiter vom Getrieberad über den Drehmomentsensorstab (drehweicher Torsionsstab) auf das Lenkrad übertragen. Diese Stöße liegen typischerweise in einem Frequenzbereich von 10-30 Hz. Durch die Eigenschwingung beginnt das Getrieberad zu zittern und erzeugt periodische Stöße in der Verzahnung. Noch verstärkt wird dieser Effekt dadurch, dass die Periodendauer der vertikal schwingenden Schnecke etwa der Periodendauer der Eigenschwingung des Systems aus Rad, Torsionsstab und Lenkrad entspricht. Die resultierenden Stöße in der Verzahnung sind als Klappergeräusche wahrnehmbar. Dieser Effekt wird noch durch Spiel in dem Festlager der Schnecke verstärkt. Derzeitige Gegenmaßnahmen sehen eine möglichst umfangreiche Reduzierung von Spielen und eine starke Einschränkung von Freiheitsgraden der Schnecke vor. Diese Maßnahmen sind nachteilig mit Effekten wie Reibungserhöhung, Preisanstieg, erhöhtem Bauraumbedarf und erhöhtem Verschleiß verbunden.

JP 2015 178 286 A1 beschreibt eine gattungsgemäße Lenkvorrichtung und ein Verfahren zur Unterdrückung von durch Flattererscheinungen hervorgerufenen Vibrationen eines Lenkrads. Dafür sind Unterdrückungsstrom-Berechnungsmittel vorgesehen, um einen Unterdrückungsstrom zu berechnen, der ein von den Rädern auf das Lenkrad übertragenes Störmoment auf Basis eines zu dem detektierten Störmoment gegenphasigen Änderungsbetrags unterdrückt.

Aus US 2009/000857 A1, US 2012/185132 A1 und US 2013/124048 A1 sind elektrische Servolenkvorrichtungen bekannt, die Lenkradvibration reduzieren können.

JP 2014/227115 A beschreibt eine Servolenkvorrichtung, bei der einhergehend mit einer Anpassung der mechanischen Impedanz der Lenkung die Vibrationsübertragungscharakteristik der Lenkung angepasst werden kann, um einer Verschlechterung des Lenkgefühls entgegen zu wirken.

Die Gebrauchsmusterschrift DE 20 2014 101 708 U1 offenbart eine Kompensationseinheit zum Dämpfen eines hörbaren Klapperns, dabei werden Lenksystemkomponenten und damit verbundene Zahnradsätze innerhalb eines Motorrauschfrequenzbereichs erregt. Ein Nachteil dieser Lösung ist, dass ein Klappergeräusch nicht beseitigt wird, sondern in einem anderen Frequenzbereich weiter existiert.

Der Erfindung liegt die Aufgabe zugrunde, eine elektromechanische Servolenkung mit verbesserter Kompensation von Geräuschen im Getriebe der Servoeinheit bereitzustellen und ein verbessertes Lenkgefühl zu ermöglichen.

Diese Aufgabe wird von einer elektromechanischen Servolenkung mit den Merkmalen des Anspruchs 1 gelöst.

Demnach ist eine elektromechanische Kraftfahrzeuglenkung mit einem mit einer unteren Lenkwelle verbundenen Lenkritzel, welches mit einer in einem Gehäuse entlang einer Längsachse verschieblich gelagerten Zahnstange zur Lenkung von Rädern in Eingriff steht, mit einem einen Rotor aufweisenden Elektromotor zur Lenkkraftunterstützung, der mittels eines Getriebes die untere Lenkwelle antreibt, mit einem Drehmomentsensor, der zwischen einer mit dem Lenkrad verbundenen oberen Lenkwelle und der unteren Lenkwelle angeordnet ist und ein vom Fahrer aufgebrachtes Lenkdrehmoment und ein von der unteren Lenkwelle auf die obere Lenkwelle rückwirkendes Drehmoment erfasst, und mit einer Steuereinrichtung, die eine Lenkungssteuerung und eine Motorregelung des Elektromotors umfasst, wobei die Lenkungssteuerung ein Motor-Soll-Drehmoment berechnet und dies an die Motorregelung weitergibt, wobei die Motorregelung Motorströme zum Betreiben des Elektromotors bestimmt, vorgesehen, wobei die Steuereinrichtung einen Kompensationsregler aufweist, der auf dem Rotor des Elektromotors in Abhängigkeit des vom Drehmomentsensor gemessenen rückwirkenden Drehmomentes ein Signal aufprägt, sodass eine durch das rückwirkende Drehmoment in dem Getriebe entstehende Relativbewegung zwischen einer dem Elektromotor zugewandten Antriebseite und einer der unteren Lenkwelle zugewandten Abtriebsseite kompensiert wird.

Der Kompensationsregler kompensiert somit die durch ein von der Straße eingeleitetes Drehmoment entstehenden Stöße im Getriebe, wodurch eine Geräuschentstehung im Getriebe reduziert werden kann.

Vorzugsweise bewirkt das Signal ein Drehmoment oder eine Bewegung des Rotors, die im Wesentlichen dem rückwirkenden Drehmoment entspricht, sodass dadurch kein Drehmoment anliegt.

Das Signal bewirkt ein Drehmoment des Rotors, durch das die Antriebsseite des Getriebes mit der Last arbeitet. Das Getriebe weicht den Stößen somit aus.

Bevorzugt misst der Drehmomentsensor einen Absolutdrehwinkel. Dabei ist es vorteilhaft, wenn die Bestimmung des Absolutdrehwinkels über die Differenz Δt zwischen dem Drehwinkel der oberen Lenkwelle und dem Drehwinkel der unteren Lenkwelle erfolgt.

Das zu kompensierende, rückwirkende Drehmoment liegt vorzugsweise in einem Frequenzbereich von 10-30 Hz.

Weiterhin kann eine Frequenzanalyseeinheit vorgesehen sein, mittels der eine Fast-Fourier-Transformation (FFT) des vom Drehmomentsensor gemessenen Signals das rückwirkende und für die Relativbewegung im Getriebe verantwortliche Drehmoment näher bestimmt werden kann. Weiterhin ist es denkbar und möglich mittels einer Diskreten Fourier-Transformation (DFT) das rückwirkende Drehmoment zu bestimmen.

Vorzugsweise weist der Kompensationsregler einen Frequenzgenerator auf, der das Signal erzeugt.

In einer Ausführungsform ist vorgesehen, dass der Kompensationsregler das Signal mittels des Frequenzgenerators erzeugt und in Motorstromvektoren mittels eines validierten Motormodells umwandelt und die Motorstromvektoren der Motorregelung zuführt, die diese mit dem aus der Lenkungssteuerung kommenden Signal verrechnet.

In einer anderen Ausführungsform ist vorgesehen, dass der Kompensationsregler das Signal mittels des Frequenzgenerators erzeugt und der Lenkungssteuerung zuführt.

Bevorzugter Weise treibt der Elektromotor eine Schneckenwelle an, die mit ihrer Schnecke in Eingriff mit einem Schneckenrad steht, dass mit der unteren Lenkwelle drehfest verbunden ist. Dabei weist die Antriebsseite die Schnecke und die Abtriebsseite das Schneckenrad auf.

Weiterhin ist ein Verfahren zur Kompensation des von der Straße eingeleiteten Drehmomentes mit den Merkmalen des Anspruchs 13 oder des Anspruchs 14 vorgesehen, wobei das Verfahren in einer Ausführungsform folgende Schritte aufweist:
- Erfassen eines vom Fahrer aufgebrachten Lenkdrehmomentes und eines von der unteren Lenkwelle auf die obere Lenkwelle rückwirkenden Drehmomentes mittels des Drehmomentsensors,
- Berechnen des Motor-Soll-Drehmomentes in der Lenkungssteuerung in Abhängigkeit des vom Fahrer aufgebrachten Lenkdrehmomentes,
- Ermitteln eines kompensierenden Drehmomentes in Abhängigkeit des von der unteren Lenkwelle auf die obere Lenkwelle rückwirkenden Drehmomentes zur Kompensation einer durch das rückwirkende Drehmoment in dem Getriebe entstehenden Relativbewegung zwischen einer dem Elektromotor zugewandten Antriebsseite und einer der unteren Lenkwelle zugewandten Abtriebsseite mittels eines Kompensationsreglers,

- Verrechnen des Motor-Soll-Drehmomentes mit dem kompensierenden Drehmoment in der Lenkungssteuerung und Weitergabe des resultierenden Signals an die Motorregelung, und
- Bestimmen von Motorströmen zum Betreiben des Elektromotors in der Motorreglung.

In einer weiteren Ausführungsform wird aus dem Motor-Soll-Drehmoment (T_{D}) in der Motorregelung ein Soll-Motorstromvektor (Id,d, Iq,d) bestimmt. Zudem sind folgende Schritte vorgesehen:
- Erzeugen eines kompensierenden Motorstromvektors in Abhängigkeit des von der unteren Lenkwelle auf die obere Lenkwelle rückwirkenden Drehmomentes in einem Kompensationsregler mittels eines Frequenzgenerators und eines validierten Motormodells, wobei der kompensierende Motorstromvektor eine durch das rückwirkende Drehmoment in dem Getriebe entstehende Relativbewegung zwischen einer dem Elektromotor zugewandten Antriebsseite und einer der unteren Lenkwelle zugewandten Abtriebsseite kompensiert,
- Verrechnen des Soll-Motorstromvektors mit dem kompensierenden Motorstromvektor in der Motorregelung, und
- Bestimmen von Motorströmen zum Betreiben des Elektromotors in der Motorreglung.

Das mittels des Kompensationsreglers auf die Antriebsseite aufgebrachte Drehmoment entspricht im Wesentlichen dem rückwirkenden Drehmoment. Bevorzugt treibt der Elektromotor eine Schneckenwelle an, die mit ihrer Schnecke in Eingriff mit einem Schneckenrad steht, dass mit der unteren Lenkwelle drehfest verbunden ist, wobei das von dem Kompensationsregler aufgebrachte Drehmoment die Schnecke mit der Last dreht.

Nachfolgend wird ein Ausführungsbeispiel der Erfindung anhand der Zeichnungen näher beschrieben. Gleiche oder funktionsgleiche Bauteile sind in allen Zeichnungen mit den gleichen Bezugsziffern versehen. Es zeigen:
- Fig. 1:: eine schematische Darstellung einer elektromechanischen Servolenkung,
- Fig. 2:: einen Schaltkreis einer Motorsteuerung, sowie
- Fig. 3:: eine räumliche Darstellung einer Servoeinheit mit Elektromotor, Schneckengetriebe und Lenkwelle.

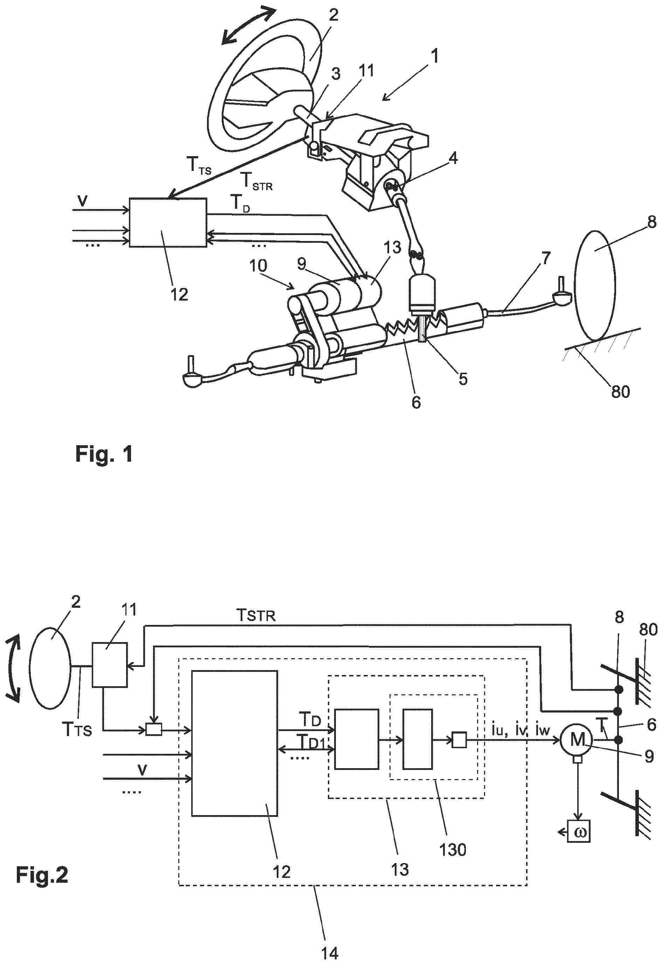

In der Figur 1 ist eine elektromechanische Kraftfahrzeuglenkung 1 mit einem Lenkrad 2, das mit einer oberen Lenkwelle 3 und einer unteren Lenkwelle 4 drehfest gekoppelt ist, schematisch dargestellt. Die obere Lenkwelle 3 steht über einen Torsionsstab in funktioneller Verbindung mit der unteren Lenkwelle 4. Die untere Lenkwelle 4 ist mit einem Ritzel 5 drehfest verbunden. Das Ritzel 5 kämmt in bekannter Weise mit einem Zahnsegment einer Zahnstange 6. Die Zahnstange 6 ist in einem Lenkungsgehäuse in Richtung ihrer Längsachse verschieblich gelagert. An ihrem freien Ende ist die Zahnstange 6 mit Spurstangen 7 über nicht dargestellte Kugelgelenke verbunden. Die Spurstangen 7 selbst sind in bekannter Weise über Achsschenkel mit je einem gelenkten Rad 8 des Kraftfahrzeugs verbunden. Eine Drehung des Lenkrades 2 führt über die Verbindung der Lenkwelle 3, 4 und des Ritzels 5 zu einer Längsverschiebung der Zahnstange 6 und damit zu einer Verschwenkung der gelenkten Räder 8. Die gelenkten Räder 8 erfahren über eine Fahrbahn 80 eine Rückwirkung, die der Lenkbewegung entgegen wirkt. Zum Verschwenken der Räder 8 ist folglich eine Kraft erforderlich, die ein entsprechendes Drehmoment am Lenkrad 2 erforderlich macht. Ein Elektromotor 9 einer Servoeinheit 10 ist vorgesehen, um dem Fahrer bei dieser Lenkbewegung zu unterstützen. Die Servoeinheit 10 kann dabei als Überlagerungslenkung an der Lenksäule oder als Hilfskraftunterstützungseinrichtung an dem Ritzel oder der Zahnstange angeordnet sein. An der oberen Lenkwelle 3 ist ein Drehmomentsensor 11 vorgesehen, der das vom Fahrer aufgebrachte Lenkdrehmoment T_{TS} erfasst. Gleichzeitig wird ein Drehmoment T_{STR}, das von der Straße kommt, ermittelt. Diese Drehmomente T_{TS} und T_{STR} werden mit weiteren Eingangsgrößen, wie zum Beispiel der Fahrzeuggeschwindigkeit v und Messsignalen vom Elektromotor 9, wie beispielsweise der momentanen Rotorposition und/oder gemessener Stromwerte in den Phasenwicklungen, an eine Lenkungssteuerung 12 übermittelt, welches daraus mit Hilfe einer Vorgabefunktion ein Motor-Soll-Drehmoment T_{D} ermittelt.

Wie in Figur 2 dargestellt ist, wird dieses Drehmoment T_{D} der Motorregelung 13 zugeführt und daraus die Motorströme i_{U1},i_{V1},i_{W1}=i₁ in einem Inverter 130 mittels PWM (Pulsweitenmodulation) bestimmt. Die Lenkungssteuerung 12 und die Motorreglung 13 sind Teil einer Steuereinrichtung 14. Der Motor 9 gibt schließlich ein Drehmoment T aus, das das vom Fahrer eingeleitete Drehmoment unterstützt.

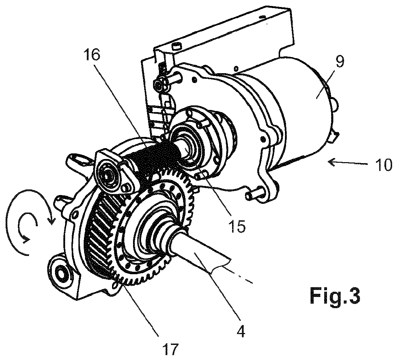

In der Figur 3 ist die Servoeinheit 10 dargestellt. Der Servomotor 9 treibt eine Schneckenwelle 15 an, die mit ihrer Schnecke 16 in Eingriff mit einem Schneckenrad 17 steht, dass mit der unteren Lenkwelle 4 drehfest verbunden ist. Bei einem Betrieb des Elektromotors 9 wird die Schneckenwelle 15 angetrieben und die Schnecke 16 und das Schneckenrad 17 drehen sich entsprechend um eine Drehunterstützung für die untere Lenkwelle 4 bereitzustellen.

Ein von der Straße in das Lenksystem eingeleiteter Drehmomentstoß kann bei der Weiterleitung an das Lenkrad 2 über den Drehmomentsensor 11 detektiert werden. Das rückwirkende Drehmoment T_{STR}, welches ein straßenseitiges Drehmoment ist, ist somit als Signal für die Lenkungsregelung verfügbar.

Die Bestimmung des Drehmoments T_{STR} kann auf der Drehung eines Torsionsstabs des Drehmomentsensors 11 und der Messung des Verdrehwinkels basieren. Abhängig davon, von welcher Seite (obere Lenkwelle 3 oder untere Lenkwelle 4) das Drehmoment aufgebracht wird, liegt bei gleicher Orientierung des Drehmoments ein Vorzeichenwechsel (im einfachsten Fall mit einem Phasenversatz von 180°) vor.

In einer weiteren Ausführungsform kann der Drehmomentsensor 11 zusätzlich einen Absolutdrehwinkel messen, sodass dadurch ermittelt werden kann, von welcher Seite das Drehmoment aufgebracht wird.

Dabei ist es bevorzugt, wenn die Bestimmung des Absolutdrehwinkels über die Differenz Δt zwischen dem Drehwinkel der oberen Lenkwelle 3 und dem Drehwinkel der unteren Lenkwelle 4 erfolgt. Hierbei wird ermittelt, ob es sich um einen Lenkwinkel handelt, bei dem die Lenkbewegung unterstützt werden soll, oder ob es sich um ein Drehmoment T_{STR} von der Straße handelt, bei dem sich der Elektromotor 9 lediglich mit der Schnecke 16 bewegen soll.

Die Abtastung des Drehmomentsensors 11 erfolgt mit etwa 1kHz. Die Steuereinrichtung 14 des Elektromotors 9 weist eine Kompensationsregelung auf. Die Steuereinrichtung 14 arbeitet in der Regel so, dass die Schnecke 16 gegen die Last gedreht wird, um somit das nötige Drehmoment in Form eines Additionsmoments auf das Schneckenrad 17 aufzubringen.

Drehschwingungen, die zu einem Klappergeräusch führen, liegen in einem Frequenzbereich von 10-30Hz. Im Gegensatz dazu beträgt das vom Fahrer eingeleitete Drehmoment 1-3 Hz. Das von dem Drehmomentsensor 11 detektierte Drehmomentsignal wird mittels eines Hoch- und Tiefpassfilters gefiltert. Es wird eine Schwelle definiert, ab der das dynamische Drehmoment im definierten Frequenzbereich in einen kritischen Bereich vordringt. In dem kritischen Bereich wird dann die Kompensationsregelung aktiviert. Dieser Bereich umfasst vorzugsweise Frequenzen von 10-30 Hz. Durch eine zusätzliche Frequenzanalyse (beispielsweise mit einer Fast-Fourier-Transformation (FFT)) kann dieser Bereich weiter eingeschränkt und optimiert werden.

Die Kompensationsregelung erzeugt auf dem Rotor des Elektromotors 9 im stehenden oder drehenden Zustand ein Spektrum von Oberwellen, das dem detektierten dynamischen Drehmoment im kritischen Bereich entspricht. Dabei arbeitet die Schnecke 16 nun in dem kritischen Frequenzbereich mit der Last, d.h., dass sich die Schnecke 16 mit dem Elektromotor 9 mitdreht, der Elektromotor 9 aber keine Unterstützung bereitstellt. Die Schnecke 16 weicht somit den Drehmomentstößen aus.

In einer bevorzugten Ausführungsform weist die Kompensationsregelung einen Frequenzgenerator auf. Die Amplitude und Phase werden über ein Modell mit der vom Drehmomentsensor 11 erfassten Ist-Größe verknüpft. Die Verzögerungszeit zur Bestimmung der korrekten Phasenlage muss einmalig für jede Konfiguration der Lenkung ermittelt werden. Die gewünschten Oberwellenamplituden und -phasen werden dann umgewandelt in Form eines jeweiligen Referenzwerts des Stroms in der q- und d-Koordinate in die Motorregelung, vor dem Eingang in die Stromregelung des Elektromotors 9 eingeleitet. Die Umwandlung der Amplituden- und Phasenvorgabe in die erforderlichen Referenzgrößen erfolgt mittels eines validierten Motormodells. In einer anderen Ausführungsform kann das mit dem Frequenzgenerator produzierte Signal mit dem ermittelten Drehmoment T_{D} in der Lenkungssteuerung verknüpft werden, so dass bestimmt werden kann, ob der Elektromotor 9 ein unterstützendes Drehmoment oder nur mit dem Getriebe 16, 17 mitdrehendes Drehmoment, welches im Folgenden als kompensierendes Drehmoment T_{D1} bezeichnet wird, aufbringt.

Die Anwendung der Erfindung kann in allen elektromotorischen Servolenkungen erfolgen und ist nicht auf elektromotorischen Servolenkungen mit Schneckengetriebe beschränkt.

Die erfindungsgemäße Servoeinheit 10 stellt eine Geräuschkompensation bereit, die in einem bestimmten Frequenzbereich aktiviert wird. Die Lenkunterstützung durch die Servoeinheit 10 erfolgt vor allem bei kleinen Frequenzen des Drehmoments. Dabei dreht sich die Schnecke 16 entgegen der Last und bringt ein Additionsmoment auf das Schneckenrad 17 auf. Bei größeren Frequenzen dient die Servoeinheit 10 zur Kompensation von Geräuschen. Es wird verhindert, dass ein Additionsmoment aufgebracht wird. Die Regelung reagiert mit einem Phasenversatz auf detektierte Schwingungen. Der Motor 9 dreht sich mit der Schnecke 16 und zwar mit der Last, sodass keine Kraft und damit kein Unterstützungsmoment aufgebaut wird und ein Klappern verhindert wird. Dies kann auch eine Dämpfung der Drehschwingung beinhalten. Störgeräusche können somit reduziert oder sogar vollständig unterbunden werden.

## Patentansprüche

1. Elektromechanische Kraftfahrzeuglenkung (1) mit
• einem mit einer unteren Lenkwelle (4) verbundenen Lenkritzel (5), welches mit einer in einem Gehäuse entlang einer Längsachse verschieblich gelagerten Zahnstange (6) zur Lenkung von Rädern (8) in Eingriff steht,
• mit einem einen Rotor aufweisenden Elektromotor (9) zur Lenckraftunterstützung, der mittels eines Getriebes die untere Lenkwelle (4) antreibt,
• mit einem Drehmomentsensor (11), der zwischen einer mit dem Lenkrad verbundenen oberen Lenkwelle (3) und der unteren Lenkwelle (4) angeordnet ist und ein vom Fahrer aufgebrachtes Lenkdrehmoment (T_{TS}) und ein von der unteren Lenkwelle (4) auf die obere Lenkwelle (3) rückwirkendes Drehmoment (T_{STR}) erfasst, und
• mit einer Steuereinrichtung (14), die eine Lenkungssteuerung (12) und eine Motorregelung (13) des Elektromotors (9) umfasst, wobei die Lenkungssteuerung (12) ein Motor-Soll-Drehmoment (T_{D}) berechnet und dieses an die Motorregelung (13) weitergibt, wobei die Motorregelung (13) Motorströme (i_{U1},i_{V1},i_{W1}=i₁) zum Betreiben des Elektromotors (9) bestimmt, wobei die
Steuereinrichtung (14) einen Kompensationsregler aufweist, der dem Rotor des Elektromotors (9) in Abhängigkeit des vom Drehmomentsensor (11) gemessenen rückwirkenden Drehmomentes (T_{STR}) ein Signal aufprägt, **dadurch gekennzeichnet, dass** das Signal so ausgebildet ist, dass eine durch das rückwirkende Drehmoment (T_{STR}) in dem Getriebe entstehende Relativbewegung zwischen einer dem Elektromotor (9) zugewandten Antriebsseite und einer der unteren Lenkwelle (4) zugewandten Abtriebsseite kompensiert wird und das Signal ein Drehmoment des Rotors bewirkt, durch das die Antriebsseite des Getriebes mit der Last arbeitet, so dass das Getriebe Stößen des rückwirkenden Drehmoments (T_{STR}) ausweicht.

2. Elektromechanische Kraftfahrzeuglenkung nach Anspruch 1, **dadurch gekennzeichnet, dass** das Signal eine Bewegung des Rotors bewirkt, die im Wesentlichen das rückwirkende Drehmoment (T_{STR}) kompensiert.

3. Elektromechanische Kraftfahrzeuglenkung nach einem der vorhergehenden Ansprüche, **dadurch gekennzeichnet, dass** der Drehmomentsensor (11) einen Absolutdrehwinkel misst.

4. Elektromechanische Kraftfahrzeuglenkung nach Anspruch 3, **dadurch gekennzeichnet, dass** die Bestimmung des Absolutdrehwinkels über die Differenz Δt zwischen dem Drehwinkel der oberen Lenkwelle (3) und dem Drehwinkel der unteren Lenkwelle (4) erfolgt.

5. Elektromechanische Kraftfahrzeuglenkung nach einem der vorhergehenden Ansprüche, **dadurch gekennzeichnet, dass** die Kompensationsregelung in einem Frequenzbereich von 10-30 Hz aktivierbar ist.

6. Elektromechanische Kraftfahrzeuglenkung nach einem der vorhergehenden Ansprüche, **dadurch gekennzeichnet, dass** eine Frequenzanalyseeinheit vorgesehen ist, die mittels einer Fast-Fourier-Transformation (FFT) des vom Drehmomentsensor gemessenen Signals das rückwirkende und für die Relativbewegung im Getriebe verantwortliche Drehmoment näher bestimmt.

7. Elektromechanische Kraftfahrzeuglenkung nach einem der vorhergehenden Ansprüche, **dadurch gekennzeichnet, dass** der Kompensationsregler einen Frequenzgenerator aufweist, der das Signal erzeugt.

8. Elektromechanische Kraftfahrzeuglenkung nach Anspruch 7, **dadurch gekennzeichnet, dass** der Kompensationsregler das Signal mittels des Frequenzgenerators erzeugt und in Motorstromvektoren (Iq1, Id1) mittels eines validierten Motormodells umwandelt und die Motorstromvektoren (Iq1, Id1) der Motorregelung (13) zuführt, die diese mit dem aus der Lenkungssteuerung (12) kommenden Signal verrechnet.

9. Elektromechanische Kraftfahrzeuglenkung nach Anspruch 7, **dadurch gekennzeichnet, dass** der Kompensationsregler das Signal mittels des Frequenzgenerators erzeugt und der Lenkungssteuerung (12) zuführt.

10. Elektromechanische Kraftfahrzeuglenkung nach einem der vorhergehenden Ansprüche, **dadurch gekennzeichnet, dass** der Elektromotor eine Schneckenwelle (15) antreibt, die mit ihrer Schnecke (16) in Eingriff mit einem Schneckenrad (17) steht, dass mit der unteren Lenkwelle (4) drehfest verbunden ist.

11. Elektromechanische Kraftfahrzeuglenkung nach Anspruch 10, **dadurch gekennzeichnet, dass** die Antriebsseite die Schnecke (16) und die Abtriebsseite das Schneckenrad (17) aufweist.

12. Verfahren zur Kompensation eines von der Straße eingeleiteten Drehmomentes in eine elektromechanische Kraftfahrzeuglenkung (1) mit
• einem mit einer unteren Lenkwelle (4) verbundenen Lenkritzel (5), welches mit einer in einem Gehäuse entlang einer Längsachse verschieblich gelagerten Zahnstange (6) zur Lenkung von Rädern (8) in Eingriff steht,
• mit einem einen Rotor aufweisenden Elektromotor (9) zur Lenkkraftunterstützung, der mittels eines Getriebes die untere Lenkwelle (4) antreibt,
• mit einem Drehmomentsensor (11), der zwischen einer mit dem Lenkrad verbundenen oberen Lenkwelle (3) und der unteren Lenkwelle (4) angeordnet ist, und
• mit einer Steuereinrichtung (14), die eine Lenkungssteuerung (12) und eine Motorregelung (13) umfasst, wobei das Verfahren folgende Schritte aufweist:
- Erfassen eines vom Fahrer aufgebrachten Lenkdrehmomentes (T_{TS}) und eines von der unteren Lenkwelle (4) auf die obere Lenkwelle (3) rückwirkenden Drehmomentes (T_{STR}) mittels des Drehmomentsensors (11),
- Berechnen des Motor-Soll-Drehmomentes (T_{D}) in der Lenkungssteuerung (12) in Abhängigkeit des vom Fahrer aufgebrachten Lenkdrehmomentes (T_{TS}),
- Ermitteln eines kompensierenden Drehmomentes (T_{D1}) in Abhängigkeit des von der unteren Lenkwelle (4) auf die obere Lenkwelle (3) rückwirkenden Drehmomentes (T_{STR}),
- Verrechnen des Motor-Soll-Drehmomentes (T_{D}) mit dem kompensierenden Drehmoment (T_{D1}) in der Lenkungssteuerung (12) und Weitergabe des resultierenden Signals an die Motorregelung (13), und
- Bestimmen von Motorströmen (i_{U1},i_{V1},i_{W1}=i₁) zum Betreiben des Elektromotors (9) in der Motorreglung (13),
**dadurch gekennzeichnet, dass** das kompensierende Drehmoment (T_{D1}) eine durch das rückwirkende Drehmoment (T_{STR}) in dem Getriebe entstehende Relativbewegung zwischen einer dem Elektromotor (9) zugewandten Antriebsseite und einer der unteren Lenkwelle (4) zugewandten Abtriebsseite mittels eines Kompensationsreglers kompensiert, wobei das mittels des Kompensationsreglers auf die Antriebsseite aufgebrachte Drehmoment dem rückwirkenden Drehmoment (T_{STR}) im Wesentlichen entspricht und die Antriebsseite des Getriebes mit der Last arbeitet, so dass das Getriebe Stößen des rückwirkenden Drehmoments (T_{STR}) ausweicht.

13. Verfahren zur Kompensation eines von der Straße eingeleiteten Drehmomentes in eine elektromechanische Kraftfahrzeuglenkung mit
• einem mit einer unteren Lenkwelle (4) verbundenen Lenkritzel (5), welches mit einer in einem Gehäuse entlang einer Längsachse verschieblich gelagerten Zahnstange (6) zur Lenkung von Rädern (8) in Eingriff steht,
• mit einem einen Rotor aufweisenden Elektromotor (9) zur Lenkkraftunterstützung, der mittels eines Getriebes die untere Lenkwelle (4) antreibt,
• mit einem Drehmomentsensor (11), der zwischen einer mit dem Lenkrad verbunden oberen Lenkwelle (3) und der unteren Lenkwelle (4) angeordnet ist, und
• mit einer Steuereinrichtung (14), die eine Lenkungssteuerung (12) und eine Motorregelung (13) umfasst, wobei das Verfahren folgende Schritte aufweist:
- Erfassen eines vom Fahrer aufgebrachten Lenkdrehmomentes (T_{TS}) und eines von der unteren Lenkwelle (4) auf die obere Lenkwelle (3) rückwirkenden Drehmomentes (T_{STR}) mittels des Drehmomentsensors (11),
- Berechnen des Motor-Soll-Drehmomentes (T_{D}) in der Lenkungssteuerung (12) in Abhängigkeit des vom Fahrer aufgebrachten Lenkdrehmomentes (T_{TS}) und Weitergabe des Signals an die Motorregelung (13) und Bestimmen eines Soll-Motorstromvektors (Id,d, Iq,d),
- Erzeugen eines kompensierenden Motorstromvektors (Id,d1, Iq,d1) in Abhängigkeit des von der unteren Lenkwelle (4) auf die obere Lenkwelle (3) rückwirkenden Drehmomentes in einem Kompensationsregler mittels eines Frequenzgenerators und eines validierten Motormodells,
- Verrechnen des Soll-Motorstromvektors (Id,d, Iq,d) mit dem kompensierenden Motorstromvektor (Id,d1, Iq,d1) in der Motorregelung (13)
- Bestimmen von Motorströmen zum Betreiben des Elektromotors (9) in der Motorreglung (13),
**dadurch gekennzeichnet, dass** der kompensierende Motorstromvektor (Id,d1, Iq,d1) eine durch das rückwirkende Drehmoment (T_{STR}) in dem Getriebe entstehende Relativbewegung zwischen einer dem Elektromotor (9) zugewandten Antriebseite und einer der unteren Lenkwelle (4) zugewandten Abtriebsseite kompensiert, wobei das mittels des Kompensationsreglers auf die Antriebsseite aufgebrachte Drehmoment dem rückwirkenden Drehmoment (T_{STR}) im Wesentlichen entspricht und die Antriebsseite des Getriebes mit der Last arbeitet, so dass das Getriebe Stößen des rückwirkenden Drehmoments (T_{STR}) ausweicht.

14. Verfahren nach einem der Ansprüche 12 oder 13 , **dadurch gekennzeichnet, dass** der Elektromotor eine Schneckenwelle (15) antreibt, die mit ihrer Schnecke (16) in Eingriff mit einem Schneckenrad (17) steht, dass mit der unteren Lenkwelle (4) drehfest verbunden ist, wobei das von dem Kompensationsregler aufgebrachte Drehmoment die Schnecke (16) mit der Last dreht.

## Claims

1. Electromechanical motor vehicle steering system (1) having
• a steering pinion (5) which is connected to a lower steering shaft (4) and is in engagement with a steering rack (6) which is mounted so as to be displaceable along a longitudinal axis in a housing and has the purpose of steering wheels (8),
• having an electric motor (9) which has a rotor, has the purpose of providing steering assistance and drives the lower steering shaft (4) by means of a transmission,
• having a torque sensor (11) which is arranged between an upper steering shaft (3), which is connected to the steering wheel, and the lower steering shaft (4), and senses a steering torque (T_{TS}) which is applied by the driver and a reactive torque (T_{STR}) which is applied to the upper steering shaft (3) by the lower steering shaft (4), and
• having a control device (14) which comprises a steering controller (12) and a motor regulating system (13) of the electric motor (9), wherein the steering controller (12) calculates a motor setpoint torque (T_{D}) and passes it on to the motor regulating system (13), wherein the motor regulating system (13) determines motor currents (i_{U1}, i_{V1}, i_{W1} = i₁) for operating the electric motor (9), where the
control device (14) has a compensation regulator which impresses a signal on the rotor of the electric motor (9) as a function of the reactive torque (T_{STR}) which is measured by the torque sensor (11), **characterized in that** the signal is embodied in such a way that a relative movement, arising as result of the reactive torque (T_{STR}) in the transmission, between a drive side facing the electric motor (9) and an output side facing the lower steering shaft (4), is compensated, and the signal causes a torque of the rotor, by means of which torque the drive side of the transmission operates with the load, with the result that the transmission avoids surges of the reactive torque (T_{STR}) .

2. Electromechanical motor vehicle steering system according to Claim 1, **characterized in that** the signal causes a movement of the rotor, which movement essentially compensates the reactive torque (T_{STR}).

3. Electromechanical motor vehicle steering system according to one of the preceding claims, **characterized in that** the torque sensor (11) measures an absolute rotational angle.

4. Electromechanical motor vehicle steering system according to Claim 3, **characterized in that** the absolute rotational angle is determined by means of the difference Δt between the rotational angle of the upper steering shaft (3) and the rotational angle of the lower steering shaft (4).

5. Electromechanical motor vehicle steering system according to one of the preceding claims, **characterized in that** the compensation regulation can be activated in a frequency range of 10-30 Hz.

6. Electromechanical motor vehicle steering system according to one of the preceding claims, **characterized in that** a frequency analysis unit is provided which determines more accurately, by means of a Fast Fourier Transformation (FFT) of the signal measured by the torque sensor, the reactive torque which is responsible for the relative movement in the transmission.

7. Electromechanical motor vehicle steering system according to one of the preceding claims, **characterized in that** the compensation regulator has a frequency generator which generates the signal.

8. Electromechanical motor vehicle steering system according to Claim 7, **characterized in that** the compensation regulator generates the signal by means of the frequency generator and converts it into motor current vectors (Iq1, Id1) by means of a validated motor model, and feeds the motor current vectors (Iq1, Id1) to the motor regulating system (13) which combines the latter by calculation with the signal coming from the steering control system (12).

9. Electromechanical motor vehicle steering system according to Claim 7, **characterized in that** the compensation regulator generates the signal by means of the frequency generator and feeds it to the steering control system (12).

10. Electromechanical motor vehicle steering system according to one of the preceding claims, **characterized in that** the electric motor drives a worm shaft (15) which is in engagement with its worm (16) with a worm gear (17) which is connected in a rotationally fixed fashion to the lower steering shaft (4).

11. Electromechanical motor vehicle steering system according to Claim 10, **characterized in that** the drive side has the worm (16) and the output side of the worm gear (17).

12. Method for compensating a torque, applied by the road into an electromechanical motor vehicle steering system (1) having
• a steering pinion (5) which is connected to a lower steering shaft (4) and is in engagement with a steering rack (6) which is mounted so as to be displaceable along a longitudinal axis in a housing and has the purpose of steering wheels (8),
• having an electric motor (9) which has a rotor and has the purpose of providing power steering which drives the lower steering shaft (4) by means of a transmission,
• having a torque sensor (11) which is arranged between an upper steering shaft (3), connected to the steering wheel, and the lower steering shaft (4), and
• having a control device (14) which comprises a steering control system (12) and a motor regulating system (13), wherein the method has the following steps:
- sensing a steering torque (T_{TS}) which is applied by the driver and a reactive torque (T_{STR}) which is applied to the upper steering shaft (3) by the lower steering shaft (4), by means of the torque sensor (11),
- calculating the motor setpoint torque (T_{D}) in the steering control system (12) as a function of the steering torque (T_{TS}) which is applied by the driver,
- determining a compensating torque (T_{D1}) as a function of the reactive torque (T_{STR}) which is applied to the upper steering shaft (3) by the lower steering shaft (4),
- combining by calculation the motor setpoint torque (T_{D}) with the compensating torque (T_{D1}) in the steering control system (12) and passing on the resulting signal to the motor regulating system (13),
and
- determining motor currents (i_{U1}, i_{V1}, i_{W1} = i₁) for operating the electric motor (9) in the motor regulating system (13),
**characterized in that** the compensating torque (T_{D1}) compensates a relative movement, arising as result of the reactive torque (T_{STR}) in the transmission, between a drive side facing the electric motor (9) and an output side facing the lower steering shaft (4) by means of a compensation regulator, wherein the torque which is applied to the drive side by means of the compensation regulator essentially corresponds to the reactive torque (T_{STR}), and the drive side of the transmission operates with the load, with the result that the transmission avoids surges of the reactive torque (T_{STR}).

13. Method for compensating a torque applied by the road into an electromechanical motor vehicle steering system having
• a steering pinion (5) which is connected to a lower steering shaft (4) and is in engagement with a steering rack (6) which mounted so as to be displaceable along a longitudinal axis in a housing and has the purpose of steering wheels (8),
• an electric motor (9) which has a rotor, has the purpose of providing power steering and drives the lower steering shaft (4) by means of a transmission,
• having a torque sensor (11) which is arranged between an upper steering shaft (3), connected to the steering wheel, and the lower steering shaft (4), and
• having a control device (14) which comprises a steering control system (12) and a motor regulating system (13), wherein the method has the following steps:
- sensing a steering torque (T_{TS}), which is applied by the driver, and a reactive torque (T_{STR}), which is applied to the upper steering shaft (3) by the lower steering shaft (4), by means of the torque sensor (11),
- calculating the motor setpoint torque (T_{D}) in the steering control system (12) as a function of the steering torque (T_{TS}) which is applied by the driver, and passing on the signal to the motor regulating system (13) and determining a setpoint motor current vector (Id,d, Iq,d),
- generating a compensating motor current vector (Id,d1, Iq,d1) as a function of the reactive torque, which is applied to the upper steering shaft (3) by the lower steering shaft (4), in a compensation regulator by means of a frequency generator and a validated motor model,
- combining by calculating the setpoint motor current vector (Id,d, Iq,d) with a compensating motor current vector (Id,d1, Iq,d1) in the motor regulating system (13),
- determining motor currents for operating the electric motor (9) in the motor regulating system (13), **characterized in that** the compensating motor current vector (Id,d1, Iq,d1) compensates a relative movement, arising in the transmission as result of the reactive torque (T_{STR}), between a drive side facing the electric motor (9) and an output side facing the lower steering shaft (4), wherein the torque which is applied to the drive side by means of the compensation regulator essentially corresponds to the reactive torque (T_{STR}) and the drive side of the transmission operates with the load, with the result that the transmission avoids surges of the reactor torque (T_{STR}).

14. Method according to one of Claims 12 and 13, **characterized in that** the electric motor drives a worm shaft (15) which is in engagement with its worm (16) with a worm gear (17) which is connected in a rotationally fixed fashion to the lower steering shaft (4), wherein the torque which is applied by the compensation regulator rotates the worm (16) with the load.

## Revendications

1. Système de direction électromécanique de véhicule automobile (1), comprenant
• un pignon de direction (5) relié à un arbre de direction inférieur (4), lequel pignon de direction s'engrène avec une crémaillère (6) montée mobile le long d'un axe longitudinal dans un boîtier pour la direction de roues (8),
• comprenant un moteur électrique (9) comportant un rotor pour l'assistance de direction, lequel moteur électrique entraîne l'arbre de direction inférieur (4) au moyen d'une transmission,
• comprenant un capteur de couple (11) qui est disposé entre un arbre de direction supérieur (3) relié au volant de direction et l'arbre de direction inférieur (4) et détecte un couple de direction (T_{TS}) appliqué par le conducteur et un couple de rétroaction (T_{STR}) de l'arbre de direction inférieur (4) sur l'arbre de direction supérieur (3), et
• comprenant un dispositif de commande (14) qui comporte une commande de direction (12) et une commande de moteur (13) du moteur électrique (9), la commande de direction (12) calculant un couple moteur de consigne (T_{D}) et le transmettant à la commande de moteur (13), la commande de moteur (13) déterminant des courants de moteur (iᵤ₁, iᵥ₁, i_{w1}=i₁) pour le fonctionnement du moteur électrique (9), dans lequel
le dispositif de commande (14) comporte un régulateur de compensation qui applique au rotor du moteur électrique (9) un signal en fonction du couple de rétroaction (T_{STR}) mesuré par le capteur de couple (11), **caractérisé en ce que** le signal est conçu de telle manière qu'un déplacement relatif, provoqué dans la transmission par le couple de rétroaction (T_{STR}), entre un côté d'entrée tourné vers le moteur électrique (9) et un côté de sortie tourné vers l'arbre de direction inférieur (4), soit compensé et **en ce que** le signal provoque un couple du rotor par lequel le côté d'entrée de la transmission fonctionne avec la charge, de sorte que la transmission évite des chocs du couple de rétroaction (T_{STR}).

2. Système de direction électromécanique de véhicule automobile selon la revendication 1, **caractérisé en ce que** le signal provoque un déplacement du rotor qui compense sensiblement le couple de rétroaction (T_{STR}).

3. Système de direction électromécanique de véhicule automobile selon l'une des revendications précédentes, **caractérisé en ce que** le capteur de couple (11) mesure un angle de rotation absolu.

4. Système de direction électromécanique de véhicule automobile selon la revendication 3, **caractérisé en ce que** la détermination de l'angle de rotation absolu est effectuée par le biais de la différence Δt entre l'angle de rotation de l'arbre de direction supérieur (3) et l'angle de rotation de l'arbre de direction inférieur (4) .

5. Système de direction électromécanique de véhicule automobile selon l'une des revendications précédentes, **caractérisé en ce que** la commande de compensation peut être activée dans une plage de fréquences de 10-30 Hz.

6. Système de direction électromécanique de véhicule automobile selon l'une des revendications précédentes, **caractérisé en ce qu'**il est prévu une unité d'analyse de fréquence qui, au moyen d'une transformation de Fourier rapide (FFT) du signal mesuré par le capteur de couple, détermine plus précisément le couple de rétroaction responsable du déplacement relatif dans la transmission.

7. Système de direction électromécanique de véhicule automobile selon l'une des revendications précédentes, **caractérisé en ce que** la commande de compensation comporte un générateur de fréquence qui génère le signal.

8. Système de direction électromécanique de véhicule automobile selon la revendication 7, **caractérisé en ce que** le régulateur de compensation génère le signal au moyen du générateur de fréquence et le convertit en des vecteurs de courant moteur (Iq1, Id1) au moyen d'un modèle de moteur validé et envoie les vecteurs de courant moteur (Iq1, Id1) à la commande de moteur (13), qui les calcule avec le signal provenant de la commande de direction (12).

9. Système de direction électromécanique de véhicule automobile selon la revendication 7, **caractérisé en ce que** le régulateur de compensation génère le signal au moyen du générateur de fréquence et l'envoie à la commande de direction (12).

10. Système de direction électromécanique de véhicule automobile selon l'une des revendications précédentes, **caractérisé en ce que** le moteur électrique entraîne un arbre à vis sans fin (15), dont la vis sans fin (16) s'engrène avec une roue à vis sans fin (17), qui est reliée à l'arbre de direction inférieur (4) de manière fixe en rotation.

11. Système de direction électromécanique de véhicule automobile selon la revendication 10, **caractérisé en ce que** le côté d'entrée comporte la vis sans fin (16) et le côté de sortie comporte la roue à vis sans fin (17).

12. Procédé de compensation d'un couple introduit par la route dans un système de direction électromécanique de véhicule automobile (1), comprenant
• un pignon de direction (5) relié à un arbre de direction inférieur (4), lequel pignon de direction s'engrène avec une crémaillère (6) montée mobile le long d'un axe longitudinal dans un boîtier pour la direction de roues (8),
• comprenant un moteur électrique (9) comportant un rotor pour l'assistance de direction, lequel moteur électrique entraîne l'arbre de direction inférieur (4) au moyen d'une transmission,
• comprenant un capteur de couple (11) qui est disposé entre un arbre de direction supérieur (3) relié au volant de direction et l'arbre de direction inférieur (4), et
• comprenant un dispositif de commande (14) qui comporte une commande de direction (12) et une commande de moteur (13), le procédé comprenant les étapes suivantes :
- détecter, au moyen du capteur de couple (11), un couple de direction (T_{TS}) appliqué par le conducteur et un couple de rétroaction (T_{STR}) de l'arbre de direction inférieur (4) sur l'arbre de direction supérieur (3),
- calculer le couple moteur de consigne (T_{D}) dans la commande de direction (12) en fonction du couple de direction (T_{TS}) appliqué par le conducteur,
- déterminer un couple de compensation (T_{D1}) en fonction du couple de rétroaction (T_{STR}) de l'arbre de direction inférieur (4) sur l'arbre de direction supérieur (3),
- calculer le couple moteur souhaité (T_{D}) avec le couple de compensation (T_{D1}) dans la commande de direction (12) et transmettre le signal qui en résulte à la commande de moteur (13), et
- déterminer des courants de moteur (iᵤ₁, iᵥ₁, i_{w1}=i₁) pour le fonctionnement du moteur électrique (9) dans la commande de moteur (13),
**caractérisé en ce que** le couple de compensation (T_{D1}) compense, au moyen d'un régulateur de compensation, un déplacement relatif, provoqué dans la transmission par le couple de rétroaction (T_{STR}), entre un côté d'entrée tourné vers le moteur électrique (9) et un côté de sortie tourné vers l'arbre de direction inférieur (4), le couple appliqué au côté d'entrée au moyen du régulateur de compensation correspondant sensiblement au couple de rétroaction (T_{STR}) et le côté d'entrée de la transmission fonctionnant avec la charge, de sorte que la transmission évite des chocs du couple de rétroaction (T_{STR}).

13. Procédé de compensation d'un couple introduit par la route dans un système de direction électromécanique de véhicule automobile, comprenant
• un pignon de direction (5) relié à un arbre de direction inférieur (4), lequel pignon de direction s'engrène avec une crémaillère (6) montée mobile le long d'un axe longitudinal dans un boîtier pour la direction de roues (8),
• comprenant un moteur électrique (9) comportant un rotor pour l'assistance de direction, lequel moteur électrique entraîne l'arbre de direction inférieur (4) au moyen d'une transmission,
• comprenant un capteur de couple (11) qui est disposé entre un arbre de direction supérieur (3) relié au volant de direction et l'arbre de direction inférieur (4), et
• comprenant un dispositif de commande (14) qui comporte une commande de direction (12) et une commande de moteur (13), le procédé comprenant les étapes suivantes :
- détecter, au moyen du capteur de couple (11), un couple de direction (T_{TS}) appliqué par le conducteur et un couple de rétroaction (T_{STR}) de l'arbre de direction inférieur (4) sur l'arbre de direction supérieur (3),
- calculer le couple moteur de consigne (T_{D}) dans la commande de direction (12) en fonction du couple de direction (T_{TS}) appliqué par le conducteur et transmettre le signal à la commande de moteur (13) et déterminer un vecteur de courant moteur de consigne (Id,d, Iq,d),
- générer un vecteur de courant moteur de compensation (Id,d1, Iq,d1) en fonction du couple de rétroaction de l'arbre de direction inférieur (4) sur l'arbre de direction supérieur (3) dans un régulateur de compensation au moyen d'un générateur de fréquence et d'un modèle de moteur validé,
- calculer le vecteur de courant moteur de consigne (Id,d, Iq,d) à l'aide du vecteur de courant moteur de compensation (Id,d1, Iq,d1) dans la commande de moteur (13),
- déterminer des courants de moteur pour le fonctionnement du moteur électrique (9) dans la commande de moteur (13),
**caractérisé en ce que** le vecteur de courant moteur de compensation (Id,d1, Iq,d1) compense un déplacement relatif, provoqué dans la transmission par le couple de rétroaction (T_{STR}), entre un côté d'entrée tourné vers le moteur électrique (9) et un côté de sortie tourné vers l'arbre de direction inférieur (4), le couple appliqué au moyen du régulateur de compensation au côté d'entrée correspondant sensiblement au couple de rétroaction (T_{STR}) et le côté d'entrée de la transmission fonctionnant avec la charge, de sorte que la transmission évite des chocs du couple de rétroaction (T_{STR}).

14. Procédé selon l'une des revendications 12 ou 13, **caractérisé en ce que** le moteur électrique entraîne un arbre à vis sans fin (15), dont la vis sans fin (16) s'engrène avec une roue à vis sans fin (17), qui est reliée à l'arbre de direction inférieur (4) de manière fixe en rotation, le couple appliqué par le régulateur de compensation faisant tourner la vis sans fin (16) avec la charge.
